(19)

Europäisches Patentamt

European Patent Office

Office européen des brevets

(11) **EP 4 322 032 A1**

(12) **EUROPEAN PATENT APPLICATION**
published in accordance with Art. 153(4) EPC

(43) Date of publication:
**14.02.2024 Bulletin 2024/07**

(21) Application number: **22860063.1**

(22) Date of filing: **06.07.2022**

(51) International Patent Classification (IPC):
**G06F 16/9535** (2019.01)   **G06F 16/9538** (2019.01)

(86) International application number:
**PCT/CN2022/104090**

(87) International publication number:
**WO 2023/024716 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2021   CN 202110991160**

(71) Applicant: **Beijing Zitiao Network Technology Co.,
Ltd.
Beijing 100190 (CN)**

(72) Inventor: **PENG, Ruiqi
Beijing 100086 (CN)**

(74) Representative: **Dentons UK and Middle East LLP
One Fleet Place
London EC4M 7WS (GB)**

(54) **QUERY RESULT DISPLAY METHOD AND APPARATUS, MEDIUM, AND ELECTRONIC DEVICE**

(57)   The present disclosure relates to a query result display method, apparatus, medium and electronic device. The method comprises: receiving a query content; determining query result quality information corresponding to the query content, the query result quality information representing a matching degree between the query content and query results obtained based on the query content; determining a display sequence of a recommended word set corresponding to the query content in the query results according to the query result quality information; adding the recommended word set to the query results according to the display sequence, to obtain a target query result; transmitting the target query result to a terminal, so as to display the recommended word set at a display position corresponding to the display sequence in a query result interface by the terminal. Accordingly, the display sequence of the recommended word set in the query result may be dynamically determined based on the query content, such that the display sequence of the recommended word set meets the query needs as well as derived query needs of the users.

Fig. 1

## Description

## CROSS-REFERENCE TO RELATED APPLICATION(S)

The present application is proposed on the basis of a Chinese patent application No. 202110991160.7, entitled as "QUERY RESULT DISPLAY METHOD AND APPARATUS, MEDIUM, AND ELECTRONIC DEVICE" filed on August 26, 2021, and claims the priority right of this Chinese patent application. The full disclosure of this Chinese patent application is combined in the present disclosure by reference.

## FIELD

The present disclosure relates to the field of computer technology, and more specifically, to a query result display method, apparatus, medium and electronic device.

## BACKGROUND

When a user conduct content search by keywords, sometimes the displayed query results cannot directly meet the user's needs. At this point, the user may alter the keywords to continue the search. In this case, the user sometimes cannot determine the appropriate alterations, resulting inefficient query.

In related technologies, recommended query words are often displayed in the query results for the user to expand the query conditions of the user. However, in the above process, the recommended query words are usually displaced at a fixed position. If the recommended words are displayed in a front position, it may affect the user to acquire the desired query results. By contrast, if the recommended words are displayed too far back, the user will usually stop this round of query when they find the desired results, which is inconvenient for the user to conduct an extended query according to the recommended words. Accordingly, it is difficult to meet the derived query needs of the user, and the query efficiency is low.

## SUMMARY

The Summary is provided to briefly introduce the concepts, and these concepts will be described in details in the following Detailed Description of Embodiments. The contents described in this Summary are not intended to identify key or essential features of the embodiments of the present disclosure, nor is it intended to limit the scope of the present disclosure.

In a first aspect, the present disclosure provides a query result display method. The method comprises:

receiving a query content;

determining query result quality information corresponding to the query content, the query result quality information representing a matching degree between the query content and query results obtained based on the query content;

determining a display sequence of a recommended word set corresponding to the query content in the query results according to the query result quality information;

adding the recommended word set to the query results according to the display sequence, to obtain a target query result;

transmitting the target query result to a terminal, so as to display the recommended word set at a display position corresponding to the display sequence in a query result interface by the terminal.

In a second aspect, the present disclosure provides a query result display method. The method comprises:

transmitting to a server a received query content;

in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;

displaying, at the display position in the query result interface, the recommended word set corresponding to the query content.

In a third aspect, the present disclosure provides a query result display apparatus. The apparatus comprises:

a receiving module for receiving a query content;

a first determination module for determining query result quality information corresponding to the query content, the query result quality information representing a matching degree between the query content and query results obtained based on the query content;

a second determination module for determining a display sequence of a recommended word set corresponding to the query content in the query results according to the query result quality information;

a processing module for adding the recommended word set to the query results according to the display sequence, to obtain a target query result;

a first transmitting module for transmitting the target query result to a terminal, so as to display the recommended word set at a display position corresponding to the display sequence in a query result interface by the terminal.

In a fourth aspect, the present disclosure provides a query content result apparatus. The apparatus comprises:

a second transmitting module for transmitting to a server a received query content;

a fourth determination module for, in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;

a display module for displaying, at the display position in the query result interface, the recommended word set corresponding to the query content.

In a fifth aspect, a computer-readable medium is provided, wherein a computer program is stored therein. When the program is executed by a processing apparatus, implementing steps of the method according to the first aspect or the second aspect.

In a sixth aspect, an electronic device is provided. The electronic device comprises:

a memory storing a computer program thereon;

a processor for execution of the computer program in the memory to perform steps of the method according to the first aspect or the second aspect.

In the above technical solution, by receiving a query content, and determining query result quality information corresponding to the query content, it can then determine a display sequence of a recommended word set corresponding to the query content in the query results corresponding to the query content according to the query result quality information;, so as to add the recommended word set to the query results according to the display sequence, to obtain a target query result, and thereby transmitting the target query result to a terminal, so as to display the recommended word set at a display position corresponding to the display sequence in a query result interface by the terminal. In accordance with the above technical solution, the display sequence of the recommended word set in the query result may be dynamically determined based on the query content, such that the display sequence of the recommended words contained in the recommended word set meets the query needs of the users. This may avoid the situation where the viewing of the query results by the users is affected due to a rather front-position display of the recommended words and ensure the contents desired by the users to be quickly found. Furthermore, the users are guided by the recommended words to initiate a new query act, so as to meet their derived query needs. Such query is user-friendly. Moreover, the user experience is enhanced while the query made by the user is performed more efficiently.

Other features and advantages of the present disclosure may be described in details in the following Detailed Description of Embodiments.

**BRIEF DESCRIPTION OF THE DRAWINGS**

Through the following detailed description with reference to the accompanying drawings, the above and other objectives, features, and advantages of embodiments of the present disclosure will become more apparent. Throughout the drawings, same or similar reference signs indicate same or similar elements. It should be appreciated that the drawings are schematic and the original components and the elements are not plotted by a given ration. In the drawings:

Fig. 1 illustrates a flowchart of a query result display method in accordance with one implementation of the present disclosure;

Fig. 2A is a schematic diagram of a query result interface in one embodiment;

Fig. 2B is a schematic diagram of a query result interface in one embodiment;

Fig. 3 is a schematic diagram of a query result interface in one embodiment;

Fig. 4 is a schematic diagram of a query result interface in one embodiment;

Fig. 5 is a block diagram of a query result display apparatus in accordance with one implementation of the present disclosure;

Fig. 6 illustrates a structural schematic diagram of an electronic device suitable for implementing the embodiments of the present disclosure.

DETAILED DESCRIPTION OF EMBODIMENTS

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It should be understood that the drawings and the embodiments of the present disclosure are provided merely for the exemplary purpose, rather than limiting the protection scope of the present disclosure.

It should be appreciated that various steps disclosed in the method implementations of the present disclosure may be executed by different orders, and/or in parallel. In addition, the method implementations may include additional steps and/or omit the illustrated ones. The scope of the present disclosure is not restricted in this regard.

The term "includes" and its variants are to be read as open-ended terms that mean "includes, but is not limited to." The term "based on" is to be read as "based at least in part on." The term "one embodiment" is to be read as "at least one embodiment." The term "a further embodiment" is to be read as "at least one further embodiment." The term "some embodiments" is to be read as "at least some embodiments." Definitions related to other terms will be provided in the following description.

It is noted that the terms "first", "second" and so on mentioned in the present disclosure are provided only to distinguish different apparatuses, modules or units, rather than limiting the sequence of the functions executed by these apparatuses, modules or units or dependency among apparatuses, modules or units.

It is noted that the modifications including "one" and "more" in the present disclosure are schematic and non-restrictive. Those skilled in the art should understand that the above modifications are to be interpreted as "one or more" unless indicated otherwise in the context.

Names provided for messages or information exchanged between a plurality of apparatuses in the implementations of the present disclosure are only for explanatory purposes, rather than limiting the scope of these messages or information.

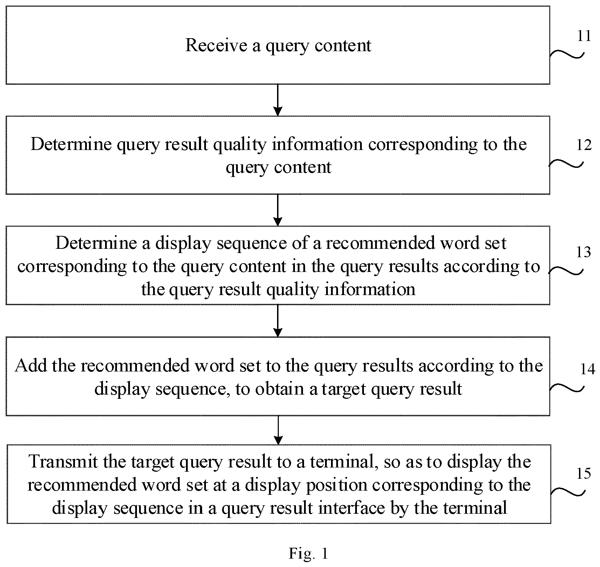

Fig. 1 illustrates a flowchart of a query result display method in accordance with one implementation of the present disclosure. As shown in Fig. 1, the method may include:

At step 11: receive a query content, wherein the query content may be query conditions input by the users. The query content may include one or more keywords, so as to facilitate content search by keywords.

At step 12: determine query result quality information corresponding to the query content, the query result quality information representing a matching degree between the query content and query results obtained based on the query content. As the matching degree goes higher, the users are more satisfied with the query result corresponding to the query content, that is, the query result desired by the users is displayed at a more forward position in the query result interface.

As an example, the query may be performed in a quality information set based on the keywords in the query content. If the corresponding query result quality information is found, the query result quality information corresponding to the query content may be determined according to the found result. Wherein, with user's permission, pre-extraction may be performed based on the user-licensed data, to obtain a corresponding relationship between the keywords in the quality information set and the query result quality information.

At step 13: determine a display sequence of a recommended word set corresponding to the query content in the query results according to the query result quality information, wherein the recommended word set may include a plurality of recommended words. The recommended words are determined based on the query content.

When the query result quality information indicates a relatively high matching degree, it means that the users are quite satisfied with the query result, that is, earlier records in the query result may meet the query needs of the users. At this point, the recommended word set may be displayed at a relative front position, to provide the users with an extended query while satisfying the query needs of the users.

At step 14: add the recommended word set to the query results according to the display sequence, to obtain a target query result.

At step 15: transmit the target query result to a terminal, so as to display the recommended word set at a display position corresponding to the display sequence in a query result interface by the terminal.

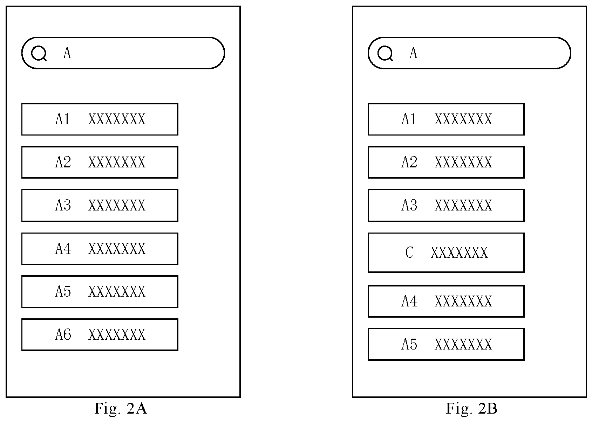

For example, the query result interface may display 6 query results. The query results determined based on the query content are A1, A2, A3, A4, A5 and A6 in sequence, as shown in Fig. 2A. As an example, if the determined display sequence is 4, the recommended words contained in the recommended word set may be displayed at the fourth position in the query result interface, that is, the recommended word set C is added to the query result by the display sequence. Here, the resulting display order of the display sequence in the target query result is: A1, A2, A3, C, A4 and A5, as illustrated in Fig. 2B.

As such, in the above technical solution, by receiving a query content, and determining query result quality information corresponding to the query content, it can then determine a display sequence of a recommended word set corresponding to the query content in the query results corresponding to the query content according to the query result quality information;, so as to add the recommended word set to the query results according to the display sequence, to obtain a target query result, and thereby transmitting the target query result to a terminal, so as to display the recommended word set at a display position corresponding to the display sequence in a query result interface by the terminal. In accordance with the above technical solution, the display sequence of the recommended word set in the query result may be dynamically determined based on the query content, such that the display sequence of the recommended words contained in the recommended word set meets the query needs of the users. This may avoid the situation where the viewing of the query results by the users is affected due to a rather front-position display of the recommended words and ensure the contents desired by the users to be quickly found. Furthermore, the users are guided by the recommended words to initiate anew query act, so as to meet their derived query needs. Such query is user-friendly. Moreover, the user experience is enhanced while the query made by the user is performed more efficiently.

In an optional embodiment, an example implementation of determining, at step 13, a display sequence of a recommended word set corresponding to the query content in the query results according to the query result quality information is demonstrated below, and may include steps of:

Determining a target number of target query results can be displayed in the query result interface of the terminal.

Wherein, the target number may be the number of query results can be displayed in one display interface determined by acquiring the display information of a corresponding terminal, that is, the number of the query results can be displayed in one screen without sliding or scrolling display. For example, this may be determined in accordance with the display resolution of the terminal and the dimension information of the query result. For example, when the terminal is a mobile phone terminal, the determined target number may be 6, or the target number may be set in the display information of the terminal in advance and thereby can be obtained directly.

Afterwards, determining the display sequence based on a difference value between quality standard information of the query result quality information and the query result quality information, and the target number, wherein a value of the query result quality information is greater than or equal to zero, and the value of the query result quality information is smaller than or equal to the quality standard information.

As an example, determine a product of the target number and a value resulting from normalizing a difference value between quality standard information of the query result quality information and the query result quality information as the initial display sequence. The formula is as follows:

$$H = f(D\text{-}A)*N;$$

Wherein, the H represents the initial display sequence;

The D represents the quality standard information of the query result quality information. For example, the quality standard information may be 1;

The A represents the query result quality information. The query result quality information is valued within a range from 0 to D;

The N represents the target number;

f(x) represents the normalization of x. As an example, the difference value between quality standard information of the query result quality information and the query result quality information may divide the quality standard information of the query result quality information for normalization. When the quality standard information is 1, the normalization operation is not necessary.

Then, in the case that the initial display sequence is not an integer, rounding the initial display sequence to obtain the display sequence.

If the initial display sequence is an integer, then the initial display sequence may be directly regarded as the display sequence.

Wherein, the rounding approach may be rounding the number up or down to an integer. This may be configured in accordance with the practical use scenario. The present disclosure is not restricted in this regard.

As an example, when the users input "Andy Lau" as the query content, it is determined that the query result quality information corresponding to the query content is 0.7, the quality standard information of the query result quality information is 1, and the target number of the query results can be displayed on the query result interface is 10. The initial display sequence determined by the above method is as follows:

$$H = f(D\text{-}A)*N = (1\text{-}0.7)*10 = 3$$

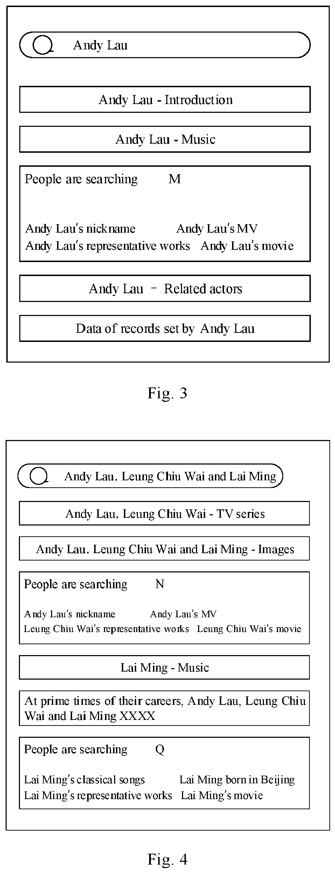

In such case, it can be directly determined that the display sequence of the recommended word set corresponding to the query content of "Andy Lau" is 3, that is, the recommended word set is displayed as the third query result in the query result interface, as shown by M area in Fig. 3.

As a further example, when the users input "teen drama" as the query content, it is determined that the query result quality information corresponding to the query content is 0.33. Accordingly, the initial display sequence determined by the above method is as follows:

$$H = f(D-A)*N = (1-0.33)*10 = 6.7$$

In such case, a round-off operation is required for the initial display sequence. For example, the initial display sequence may be rounded down and the determined display sequence is 6, that is, it is determined that the display sequence of the recommended word set corresponding to the query content of "teen drama" is 6. The recommended word set is displayed as the sixth query result in the query result interface.

Therefore, with the above technical solution, the display sequence of the recommended word set corresponding to the query content can be determined based on the query content input by the users, so as to dynamically adjust the display sequence of the recommended word set according to the input content of the users. This may meet the need of the users for obtaining the desired query result, and also provide the users with more recommended word queries, so as to save the users' operations. The derived query needs of the users are also met to a given extent and the query experience of the users is also enhanced.

In an optional embodiment, an example implementation of determining a display sequence of a recommended word set corresponding to the query content in the query results according to the query result quality information is demonstrated below. Besides the above steps, it may further include steps of:

Acquire a target range for the display sequence of the recommended word set. Wherein, in the present disclosure, displaying the recommended word set may facilitate the users to perform extended query. Without modifying the query conditions by themselves, the users may achieve a further query or related queries. Therefore, to facilitate the users' query operations, a target range for the display sequence of the recommended word set may be preset, so as to avoid an adverse influence on the user's query experience if the display sequence is too front or far back.

In the case that the determined display sequence exceeds the target range, correcting the display sequence according to the target range to obtain a corrected sequence, and updating the display sequence to the corrected sequence.

Wherein the target range for the display sequence of the recommended word set may be preset. For example, if the target number of query results to be displayed in the query result interface is 10, the target range for the display sequence of the recommended word set may be set to [3, 8], that is, the recommended word set may be at the third to the eighth positions of the display result in the query result interface.

As an example, correcting the display sequence according to the target range to obtain a corrected sequence may include:

If the display sequence is smaller than a lower limit value of the target range, the lower limit value of the target range used as the corrected sequence; if the display sequence is greater than an upper limit value of the target range, the upper limit value of the target range used as the corrected sequence.

In this embodiment, if the obtained display sequence is 2, that is, the display sequence corresponding to the recommended word set exceeds the target range for the display sequence of the recommended word set, the lower limit value (i.e., 3) of the target range may be used as the corrected sequence, and the display sequence is updated to 3.

Thereby, in accordance with the above technical solution, the display sequence of the recommended word set may be restricted and corrected based on the target range for the display sequence of the recommended word set. This may avoid the scenario where the contents desired by the users are displayed at back positions because the recommended word set is displayed at a rather front position, which lowering the query efficiency. In addition, it may also avoids the scenario where the display sequence of the recommended word set is too back and the users need to modify the query content to perform related queries, which is more in line with the usage requirements of the users.

In an optional embodiment, the query content includes a plurality of query keywords;

Correspondingly, in step 13, an example implementation of determining a display sequence of a recommended word set corresponding to the query content in the query results according to the query result quality information further includes:

For each of the query keywords, determine a recommended word display sequence corresponding to the query keyword based on the query result quality information corresponding to the query keyword.

In this embodiment, the query result quality information corresponding to each query keyword may be same or different. As such, for each query keyword, it may determine a recommended word display sequence corresponding to the query keyword according to the query result quality information corresponding to the query keyword. The display position corresponding to the display sequence is used for displaying the recommended word corresponding to the query keyword. Wherein, the recommended word display sequence may be determined by the above illustrated method for determining the display sequence on the basis of the query result quality information. No further details will be given here.

Then, determine the display sequence corresponding to the query content on the basis of the recommended word display sequences corresponding to each of the query keywords.

After determining the recommended word display sequence corresponding to each query keyword, the display sequence corresponding to the query content may be comprehensively determined according to the relation between each keyword.

As an example, a plurality of query keywords included in the query content have an OR relationship.. In other words, the query result is provided based on the query for any one of the plurality of query keywords. For example, if the query keywords include "Andy Lau, Leung Chiu Wai and Lai Ming", the query results may include records related to Andy Lau only, records related to Leung Chiu Wai only, records related to Lai Ming, and may also include records related to more than one of these people.

In this embodiment, an example implementation of determine the display sequence corresponding to the query content on the basis of the recommended word display sequences corresponding to each of the query keywords is demonstrated below, and may include steps of:

If the query keywords correspond to different recommended word display sequences, determine each of the recommended word display sequences corresponding to the query keywords as a display sequence corresponding to the query content, and determine recommended words in the recommended word set corresponding to the recommended word display sequence on the basis of the query keywords corresponding to the recommended word display sequence, and adding the recommended words to the target query result.

If a plurality of the query keywords corresponds to the same recommended word display sequence, determine the recommended word display sequence as a display sequence for the plurality of the keywords, and determine the number of recommended words respectively corresponding to the plurality of query keywords in the recommended word set in accordance with a total number of query keywords corresponding to the recommended word display sequence and a display number of recommended words can be displayed in the recommended word set, so as to acquire recommended words in an amount respectively corresponding to the plurality of query keywords, and add to the target query result.

Wherein, each of the recommended word display sequences corresponds to one recommended word set. In other words, in this embodiment, according to the query result quality information respectively corresponding to "Andy Lau", "Leung Chiu Wai" or "Lai Ming", the display sequence of the corresponding recommended word set may be determined. The specific method for determining the display sequence has been described above in details and will not be repeated here. As an example, the determined display sequences are as follows: the corresponding display sequence for "Andy Lau" is 3, the corresponding display sequence for "Leung Chiu Wai" is 3, and the corresponding display sequence for "Lai Ming" is 6.

In the above example, the query keywords "Andy Lau" and "Leung Chiu Wai" correspond to the same recommended word display sequence. Therefore, when determining the recommended word set corresponding to the display sequence, it is required to select the recommended word to be displayed from the recommended words corresponding to the two query keywords.

For example, the number of recommended words can be displayed in the recommended word set is 4, and a total of two query keywords correspond to the recommended word display sequence. Therefore, the number of recommended words respectively corresponding to the plurality of query keywords in the recommended word set can be determined. In this example, it may be determined that "Andy Lau" and "Leung Chiu Wai" respectively correspond to two recommended words. Then, two recommended words are selected respectively from the recommended words corresponding to "Andy Lau" and "Leung Chiu Wai" as the recommended word in the recommended word set corresponding to the display sequence, and may be added into the target query result. The query result interface of the corresponding target query result is shown as N area of Fig. 4.

As stated above, "Lai Ming" is the only query keyword corresponding to the display sequence of 6. As such, the recommended words in the recommended word set corresponding to the recommended word display sequence may be determined directly based on the query keyword "Lai Ming" corresponding to the recommended word display sequence, and the recommended words are added into the target query result. For example, the display number of recommended words can be displayed in the recommended word set is 4. Thus, four recommended words may be selected from the recommended words corresponding to "Lai Ming" as the recommended words in the recommended word set corresponding to the display sequence, and may be added into the target query result. The query result interface of the corresponding target query result is shown as Q area of Fig. 4. Hence, the recommended words corresponding to a plurality of query keywords may be displayed separately to diversify the recommended query.

In an optional embodiment, the query result may be provided based on a plurality of query keywords. For example, if the query keyword is "a joint work by Andy Lau, Leung Chiu Wai and Lai Ming", the query result includes records related to the above three persons.

Correspondingly, an example implementation of determining the display sequence corresponding to the query content on the basis of the recommended word display sequences corresponding to each of the query keywords is as follows, including:

Determining a sequence resulted from averaging and rounding off the recommended word display sequences corresponding to each of the query keywords as the display sequence corresponding to the query content.

Continuing with the above example, the determined recommended word display sequences are as follows: the display sequence corresponding to "Andy Lau" is 3, the recommended word display sequence corresponding to "Leung Chiu Wai" is 3, and the recommended word display sequence corresponding to "Lai Ming" is 6. As such, the display sequence corresponding to the query content may be 4 (that is, (3+3+6)/3). After that, the recommended words in the recommended word set to be displayed may be further determined and added to the target query result. Such implementation has been elaborated above and will not be repeated here. Therefore, the recommended words corresponding to a plurality of query keywords may be displayed comprehensively.

Thereby, in accordance with the above technical solution, when the query content includes a plurality of query keywords, the recommended word display sequences corresponding to the plurality of query keywords may be respectively determined. On this basis, the display sequence corresponding to the query content may be determined according to the relationship among the plurality of query keywords and the plurality of recommended word display sequences, so as to display the recommended words corresponding to the plurality of query keywords. Hence, the query needs of the users are met and the users may be specifically prompted with different recommended words, so as to facilitate the subsequent query made by the users and enhance the usage experience of the users.

In an optional embodiment, the query result quality information corresponding to the query content is determined based on the query result quality information corresponding to the query keywords comprised in the query content. The query result quality information corresponding to the query keywords is predetermined by:

Acquiring a plurality of history query records corresponding to the query keywords. Wherein, with user's permission, query records generated from the queries made by the users may be acquired as history query records. Each history query record is provided for demonstrating a complete process of a query on the basis of the query keyword.

Then, preprocess the plurality of history query records to obtain query result confirmation information corresponding to each of the history query records, wherein the query result confirmation information characterizes operations executed by a user in a process of completing a query based on the query keywords, the operations comprising at least one of: confirmation operation, page-turning operation, keyword modification operation, and browsing operation.

The confirmation operation is performed to determine whether the users have confirmed the query results in this round of query for viewing; and, if so, the display ranking of the query result confirmed by the users among all found query results.

The page-turning operation is performed to determine the number of page-turning operations triggered by the users during the query process corresponding to the query records. If the number is 0, it indicates that no page-turning operations are performed.

The keyword modification operation is performed to determine the number of modifications made on the query keywords by the users during the query process corresponding to the query records. If the number is 0, it indicates that no keyword modification operations are executed.

The browsing operation is performed to determine the information regarding the length of time the user spent on viewing the query results during the query process corresponding to the query records.

Wherein the query result confirmation information may be determined based on a value of a corresponding field in the history query records. No further details will be given here.

Afterwards, it may determine the query result quality information corresponding to the query keywords based on the query result confirmation information corresponding to the plurality of history query records and a decision-making tree model.

As an example, the query result confirmation information corresponding to the plurality of history query records may be input to a decision-making tree model, to obtain decision parameters corresponding to each history query record. An average value of the decision parameters corresponding to each history query record is determined as the query result quality information corresponding to the query keywords, and stored respectively to obtain the quality information set.

Accordingly, with the above technical solution, the query result quality information corresponding to the query keywords may be determined based on the corresponding history query records of the query keywords. In addition, a determination may also be made based on a multi-user query process, to ensure a matching degree between the determined query result quality information and the query keywords, avoid deviations caused by single user data, and broaden the use range of the query result display method.

In an optional embodiment, the decision-making tree model is trained and obtained by:

Acquiring a training sample set, wherein each training sample in the training sample set comprises a training query record corresponding to the training sample and marked query result quality information corresponding to the training query record.

Wherein, the query result quality information can be marked based on the operations executed by the users in the training query records. As an example:

Record 1: query keyword, click the first query result, and complete the query. The users complete the query operation by few operations, indicating an extremely satisfied query result. The query result quality information can be marked as 0.9.

Record 2: query keyword, click multiple query results, and complete the query. The users complete the query operation by a relative few operations, indicating a relatively satisfied query result. The query result quality information can be marked as 0.6.

Record 3: query keyword, click none of the query results, query keywords by multiple modifications, and complete the query. The users perform a lot of operations to complete the query operation, indicating a poorly satisfied query result. The query result quality information can be marked as 0.2.

Then, preprocess the training query record to obtain query result confirmation information corresponding to each of the training query record. The step has been described above and will not be repeated.

Perform model training with query result confirmation information corresponding to the training query record as input and marked query result quality information corresponding to the training query record as target output, so as to obtain the decision-making tree model.

In this embodiment, the weights corresponding to respective query result confirmation information in the decision-making tree model are randomly initialized, or initialized to the same value. Then, the weights in the decision-making tree model may be adjusted in accordance with the training query records and marked query result quality information corresponding to the training query records, to further obtain a trained decision-making tree model. Wherein, the decision-making tree model may be trained by regular methods in the art on the basis of the training samples. The details of the training will not be elaborated here.

Thereby, with the above technical solution, the decision-making tree model may be trained according to a plurality of dimensions of the query result confirmation information in the query records. An accurate weight may be determined for each dimension to sort the importance of a plurality of dimensions, so as to facilitate the subsequent determination of the query result quality information corresponding to the query keywords. Besides, manual marking is no longer required and the labor workload is effectively reduced.

In an optional embodiment, each of the query result quality information corresponding to the query keywords is stored by a quality information set, and the method may further comprises:

acquiring a plurality of target query records for updating.

For example, a plurality of target query records for updating may be obtained when a predetermined time has reached or a predetermined number of query results have generated since last update. Correspondingly, the target query record may be a query record generated after the last update, or a query record generated after the last update plus a part of the query records before the last update.

Preprocess the plurality of target query records, and obtain a target keyword in each of the target query records and query result confirmation information corresponding to the target keyword, wherein the target keyword is a first keyword in the query content corresponding to the target query records. Wherein, the target query record usually includes query records corresponding to a plurality of query keywords. The query keyword to be updated may be a first keyword in a plurality of query keywords included in the target query record. The specific approach for determining the query result confirmation information has been described above and will not be repeated here.

Then, determine query result quality information corresponding to the target keyword based on the decision-making tree model and query result confirmation information corresponding to the same target keyword.

In this embodiment, grouping is performed based on the target keywords corresponding to respective query records, so as to obtain a query record group corresponding to each target keyword. For the records contained in each query record group, the query result quality information of the target keywords corresponding to the query record group is determined. The detailed implementation is similar to that proposed for determining the query result quality information corresponding to the query keywords based on the query result confirmation information corresponding to the plurality of history query records and a decision-making tree model, and will not be repeated here.

Subsequently, update the quality information set with the query result quality information corresponding to the target keyword.

As an example, if the quality information set is free of the query result quality information corresponding to the target keywords, the query result quality information corresponding to the target keywords may be directly stored to the quality information set. However, if the quality information set includes the query result quality information corresponding to the target keywords, the query result quality information corresponding to the target keywords may be substituted with query result quality information stored in the quality information set, so as to update the quality information set.

Thereby, in accordance with the above technical solution, the query result quality information corresponding to the query keywords may be updated. On one hand, new query result quality information may be determined based on the recent query operations of the user, and the data amount in the quality information set may be increased, such that the quality information set may be applied to a broader scope of content query. On the other hand, the previously determined query result quality information corresponding to the query keywords may be updated, to ensure a match between the query result quality information in the quality information set and the actual query operations of the user. The accuracy of the recommended words prompted to the user is further guaranteed, and facilitate the use by the users.

The present disclosure also provides a query result display method, wherein the method comprises:

Transmitting to a server a received query content, wherein the query content may be the content of received user input.

In response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result.

Displaying, at the display position in the query result interface, the recommended word set corresponding to the query content.

Wherein, the received target query result may include the query results obtained from queries made on the basis of the query content, and may include the recommended word set determined according to the query content. Besides, the display sequence corresponding to the recommended word set may be dynamically determined. When displaying the target query result at the terminal, it may determine a display position corresponding to the recommended word set in view of the display sequence. For example, if the display sequence is determined to be 4, the recommended words in the recommended word set will be displayed at the fourth display position in the query result interface during the display of the query results. The corresponding display method and schematic diagrams of the display interface have been depicted in details above.

Thereby, with the above technical solution, the display sequence of the recommended word set in the query results may be dynamically determined based on the query content, such that the terminal may dynamically determine the display position of the recommended word set while displaying the recommended word set in the query results. The display position of the recommended words contained in the recommended word set accordingly complies with the query needs of the users. This may avoid the situation where the viewing of the query results by the users is affected due to a rather front-position display of the recommended words and ensure the contents desired by the users to be quickly found. Furthermore, the users are guided by the recommended words to initiate a new query act, so as to meet their derived query needs. Such query is user-friendly. Moreover, the user experience is enhanced while the query made by the user is performed more efficiently.

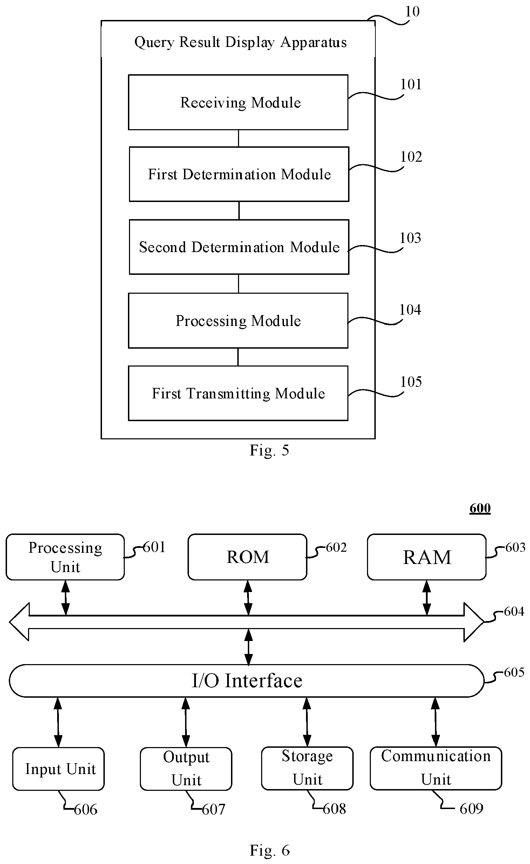

The present disclosure also provides a query result display apparatus. As shown in Fig. 5, the apparatus 10 comprises:

a receiving module 101 for receiving a query content;

a first determination module 102 for determining query result quality information corresponding to the query content, the query result quality information representing a matching degree between the query content and query results obtained based on the query content;

a second determination module 103 for determining a display sequence of a recommended word set corresponding to the query content in the query results according to the query result quality information;

a processing module 104 for adding the recommended word set to the query results according to the display sequence, to obtain a target query result;

a first transmitting module 105 for transmitting the target query result to a terminal, so as to display the recommended word set at a display position corresponding to the display sequence in a query result interface by the terminal.

Optionally, the second determination module includes:

a first determination submodule for determining a target number of target query results can be displayed in the query result interface of the terminal;

a second determination submodule for determining the display sequence based on a difference value between quality standard information of the query result quality information and the query result quality information, and the target number, wherein a value of the query result quality information is greater than or equal to zero, and the value of the query result quality information is smaller than or equal to the quality standard information.

Optionally, the second determination module also includes:

an acquisition submodule for acquiring a target range for the display sequence of the recommended word set;

a correction submodule for, in the case that the determined display sequence exceeds the target range, correcting the display sequence according to the target range to obtain a corrected sequence, and updating the display sequence to the corrected sequence.

Optionally, the query content includes a plurality of query keywords;

The second determination module consists of:

a third determination submodule for determining, for each of the query keywords, a recommended word display sequence corresponding to the query keyword based on the query result quality information corresponding to the query keyword;

a fourth determination submodule for determining the display sequence corresponding to the query content on the basis of the recommended word display sequences corresponding to each of the query keywords.

Optionally, the plurality of query keywords have an OR relationship.

The fourth determination submodule includes:

a first processing submodule for determining, if the query keywords correspond to different recommended word display sequences, each of the recommended word display sequences corresponding to the query keywords as a display sequence corresponding to the query content, and determining recommended words in the recommended word set corresponding to the recommended word display sequence on the basis of the query keywords corresponding to the recommended word display sequence, and adding the recommended words to the target query result;

a second processing submodule for determining, if a plurality of the query keywords corresponds to the same recommended word display sequence, the recommended word display sequence as a display sequence for the plurality of the keywords, and determining the number of recommended words respectively corresponding to the plurality of query keywords in the recommended word set in accordance with a total number of query keywords corresponding to the recommended word display sequence and a display number of recommended words can be displayed in the recommended word set, so as to acquire recommended words in an amount respectively corresponding to the plurality of query keywords, and add to the target query result.

Optionally, the fourth determination submodule includes:
a third processing submodule for determining a sequence resulted from averaging and rounding off the recommended word display sequences corresponding to each of the query keywords as the display sequence corresponding to the query content.

Optionally, the query result quality information corresponding to the query content is determined based on the query result quality information corresponding to the query keywords comprised in the query content. The query result quality information corresponding to the query keywords is predetermined by:

acquiring a plurality of history query records corresponding to the query keywords;

preprocessing the plurality of history query records to obtain query result confirmation information corresponding to each of the history query records, wherein the query result confirmation information characterizes operations executed by a user in a process of completing a query based on the query keywords, the operations comprising at least one of: confirmation operation, page-turning operation, keyword modification operation, and browsing operation;

determining the query result quality information corresponding to the query keywords based on the query result confirmation information corresponding to the plurality of history query records and a decision-making tree model.

Optionally, the decision-making tree model is trained and obtained by:

acquiring a training sample set, wherein each training sample in the training sample set comprises a training query record corresponding to the training sample and marked query result quality information corresponding to the training query record;

preprocessing the training query record to obtain query result confirmation information corresponding to each of the training query record;

performing model training with query result confirmation information corresponding to the training query record as input and marked query result quality information corresponding to the training query record as target output, so as to obtain the decision-making tree model.

Optionally, each of the query result quality information corresponding to the query keywords is stored by a quality information set. The apparatus further includes:

an acquisition module for acquiring a plurality of target query records for updating;

a preprocessing module for preprocessing the plurality of target query records, and obtaining a target keyword in each of the target query records and query result confirmation information corresponding to the target keyword, wherein the target keyword is a first keyword in the query content corresponding to the target query records;

a third determination module for determining query result quality information corresponding to the target keyword based on the decision-making tree model and query result confirmation information corresponding to the same target keyword;

an updating module for updating the quality information set with the query result quality information corresponding to the target keyword.

The present disclosure further provides a query result display apparatus. The apparatus comprises:

a second transmitting module for transmitting to a server a received query content;

a fourth determination module for in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;

a display module for displaying, at the display position in the query result interface, the recommended word set corresponding to the query content.

Referring to Fig. 6 below, which illustrates a structural schematic diagram of an electronic device 600 suitable for implementing the embodiments of the present disclosure. In the embodiments of the present disclosure, the terminal device may include, but not limited to, mobile terminals, such as mobile phones, notebooks, digital broadcast receivers, PDAs (Personal Digital Assistant), PADs (Portable Android Device), PMPs (Portable Multimedia Player) and vehicle terminals (such as car navigation terminal) etc., and fixed terminals, such as digital TVs and desktop computers etc. The electronic device shown in Fig. 6 is just an example and will not put any restrictions on the functions and application ranges of the embodiments of the present disclosure.

According to Fig. 6, the electronic device 600 may include a processing unit (e.g., central processor, graphic processor and the like) 601, which can execute various suitable actions and processes based on the programs stored in the read-only memory (ROM) 602 or programs loaded in the random-access memory (RAM) 603 from a storage unit 608. The RAM 603 can also store all kinds of programs and data required by the operations of the electronic device 600. Processing unit 601, ROM 602 and RAM 603 are connected to each other via a bus 604. The input/output (I/O) interface 605 is also connected to the bus 604.

Usually, input unit 606 (including touch screen, touchpad, keyboard, mouse, camera, microphone, accelerometer, gyroscope and like) and output unit 607 (including liquid crystal display (LCD), speaker and vibrator etc.), storage unit 608 (including tape and hard disk etc.), and communication unit 609 may be connected to the I/O interface 605. The communication unit 609 may allow the electronic device 600 to exchange data with other devices through wired or wireless communications. Although Fig. 6 illustrates the electronic device 600 having various units, it should be understood that it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a non-transitory computer readable medium. The computer programs include program codes for executing the method demonstrated by the flowchart. In such embodiments, the computer programs may be downloaded and installed from networks via the communication unit 609, or installed from the storage unit 608, or installed from the ROM 602. The computer programs, when executed by the processing unit 601, perform the above functions defined in the method according to the embodiments of the present disclosure.

It is noted that, the above disclosed computer readable medium in the present disclosure may be computer readable signal medium or computer readable storage medium or any combinations thereof. The computer readable storage medium for example may include, but not limited to, electric, magnetic, optical, electromagnetic, infrared or semiconductor systems, apparatus or devices, or any combinations thereof. Specific examples of the computer readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same. In the present disclosure, the computer readable signal medium may include a data signal propagated in baseband or as part of a carrier wave, carrying computer readable program codes therein. Such propagated data signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses, or devices. Program codes contained on the computer readable medium may be transmitted by any suitable media, including but not limited to: electric wires, fiber optic cables and RF (radio frequency) etc., or any suitable combinations thereof.

In some implementations, clients and servers may communicate with each other via any currently known or to be developed network protocols, such as HTTP (HyperText Transfer Protocol) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any currently known or to be developed networks.

The above computer readable medium may be included in the aforementioned electronic device or stand-alone without fitting into the electronic device.

The above computer readable medium bears one or more programs. When the above one or more programs are executed by the electronic device, the electronic device is enabled to: receive a query content; determine query result quality information corresponding to the query content, the query result quality information representing a matching degree between the query content and query results obtained based on the query content; determine a display sequence of a recommended word set corresponding to the query content in the query results according to the query result quality information; add the recommended word set to the query results according to the display sequence, to obtain a target query result; transmit the target query result to a terminal, so as to display the recommended word set at a display position corresponding to the display sequence in a query result interface by the terminal.

Alternatively, the above computer readable medium carries one or more programs. When the above one or more programs are executed by the electronic device, the electronic device is enabled to: transmit to a server a received query content; in response to receiving a target query result transmitted by the server, determine a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result; display, at the display position in the query result interface, the recommended word set corresponding to the query content.

The computer program instructions for executing operations of the present disclosure may be written in one or more programming languages or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flowchart and block diagram in the drawings illustrate system architecture, functions and operations that may be implemented by systems, methods and computer program products according to various implementations of the present disclosure. In this regard, each block in the flowchart or block diagram can represent a module, a part of program segment or code, wherein the module and the part of program segment or code include one or more executable instructions for performing stipulated logic functions. It should be noted that, in some alternative implementations, the functions indicated in the block can also take place in an order different from the one indicated in the drawings. For example, two successive blocks can be in fact executed in parallel or sometimes in a reverse order dependent on the involved functions. It should also be noted that each block in the block diagram and/or flowchart and combinations of the blocks in the block diagram and/or flowchart can be implemented by a hardware-based system exclusive for executing stipulated functions or actions, or by a combination of dedicated hardware and computer instructions.

Modules described in the embodiments of the present disclosure may be implemented by software or hardware. In some cases, the name of the module should not be considered as the restriction over the module per se. For example, the receiving module may also be depicted as "module for receiving query contents".

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared, or semiconductor systems, apparatus or devices, or any combinations thereof.

Specific examples of the machine readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof.

In accordance with one or more embodiments of the present disclosure, Example 1 provides a query result display method, wherein the method comprises:

receiving a query content;

determining query result quality information corresponding to the query content, the query result quality information representing a matching degree between the query content and query results obtained based on the query content;

determining a display sequence of a recommended word set corresponding to the query content in the query results according to the query result quality information;

adding the recommended word set to the query results according to the display sequence, to obtain a target query result;

transmitting the target query result to a terminal, so as to display the recommended word set at a display position corresponding to the display sequence in a query result interface by the terminal.

In accordance with one or more embodiments of the present disclosure, Example 2 provides the method of Example 1, wherein the determining a display sequence of a recommended word set corresponding to the query content in the query results according to the query result quality information includes:

determining a target number of target query results can be displayed in the query result interface of the terminal;

determining the display sequence based on a difference value between quality standard information of the query result quality information and the query result quality information, and the target number, wherein a value of the query result quality information is greater than or equal to zero, and the value of the query result quality information is smaller than or equal to the quality standard information.

In accordance with one or more embodiments of the present disclosure, Example 3 provides the method of Example 2, wherein the determining a display sequence of a recommended word set corresponding to the query content in the query results according to the query result quality information further includes:

acquiring a target range for the display sequence of the recommended word set;

in the case that the determined display sequence exceeds the target range, correcting the display sequence according to the target range to obtain a corrected sequence, and updating the display sequence to the corrected sequence.

In accordance with one or more embodiments of the present disclosure, Example 4 provides the method of Example 1, wherein the query content includes a plurality of query keywords.

The determining a display sequence of a recommended word set corresponding to the query content in the query results according to the query result quality information further includes:

for each of the query keywords, determining a recommended word display sequence corresponding to the query keyword based on the query result quality information corresponding to the query keyword;

determining the display sequence corresponding to the query content on the basis of the recommended word display sequences corresponding to each of the query keywords.

In accordance with one or more embodiments of the present disclosure, Example 5 provides the method of Example 4, wherein the plurality of query keywords have an OR relationship.

The determining the display sequence corresponding to the query content on the basis of the recommended word display sequences corresponding to each of the query keywords includes:

if the query keywords correspond to different recommended word display sequences, determining each of the recommended word display sequences corresponding to the query keywords as a display sequence corresponding to the query content, and determining recommended words in the recommended word set corresponding to the recommended word display sequence on the basis of the query keywords corresponding to the recommended word display sequence, and adding the recommended words to the target query result;

if a plurality of the query keywords corresponds to the same recommended word display sequence, determining the recommended word display sequence as a display sequence for the plurality of the keywords, and determining the number of recommended words respectively corresponding to the plurality of query keywords in the recommended word set in accordance with a total number of query keywords corresponding to the recommended word display sequence and a display number of recommended words can be displayed in the recommended word set, so as to acquire recommended words in an amount respectively corresponding to the plurality of query keywords, and add to the target query result.

In accordance with one or more embodiments of the present disclosure, Example 6 provides the method of Example 4, wherein the determining the display sequence corresponding to the query content on the basis of the recommended word display sequences corresponding to each of the query keywords includes: determining a sequence resulted from averaging and rounding off the recommended word display sequences corresponding to each of the query keywords as the display sequence corresponding to the query content.

In accordance with one or more embodiments of the present disclosure, Example 7 provides the method of any of Examples 1-6, wherein the query result quality information corresponding to the query content is determined based on the query result quality information corresponding to the query keywords comprised in the query content, and the query result quality information corresponding to the query keywords is predetermined by:

acquiring a plurality of history query records corresponding to the query keywords;

preprocessing the plurality of history query records to obtain query result confirmation information corresponding to each of the history query records, wherein the query result confirmation information characterizes operations executed by a user in a process of completing a query based on the query keywords, the operations comprising at least one of: confirmation operation, page-turning operation, keyword modification operation, and browsing operation;

determining the query result quality information corresponding to the query keywords based on the query result confirmation information corresponding to the plurality of history query records and a decision-making tree model.

In accordance with one or more embodiments of the present disclosure, Example 8 provides the method of Example 7, wherein the decision-making tree model is trained and obtained by:

acquiring a training sample set, wherein each training sample in the training sample set comprises a training query record corresponding to the training sample and marked query result quality information corresponding to the training query record;

preprocessing the training query record to obtain query result confirmation information corresponding to each of the training query record;

performing model training with query result confirmation information corresponding to the training query record as input and marked query result quality information corresponding to the training query record as target output, so as to obtain the decision-making tree model.

In accordance with one or more embodiments of the present disclosure, Example 9 provides the method of Example 7, wherein each of the query result quality information corresponding to the query keywords is stored by a quality information set, and the method further comprises:

acquiring a plurality of target query records for updating;

preprocessing the plurality of target query records, and obtaining a target keyword in each of the target query records and query result confirmation information corresponding to the target keyword, wherein the target keyword is a first keyword in the query content corresponding to the target query records;

determining query result quality information corresponding to the target keyword based on the decision-making tree model and query result confirmation information corresponding to the same target keyword;

updating the quality information set with the query result quality information corresponding to the target keyword.

In accordance with one or more embodiments of the present disclosure, Example 10 provides a query result display method, wherein the method comprises:

transmitting to a server a received query content;

in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;

displaying, at the display position in the query result interface, the recommended word set corresponding to the query content.

In accordance with one or more embodiments of the present disclosure, Example 11 provides a query result display apparatus, wherein the apparatus comprises:

a receiving module for receiving a query content;

a first determination module for determining query result quality information corresponding to the query content, the query result quality information representing a matching degree between the query content and query results obtained based on the query content;

a second determination module for determining a display sequence of a recommended word set corresponding to the query content in the query results according to the query result quality information;

a processing module for adding the recommended word set to the query results according to the display sequence, to obtain a target query result;

a first transmitting module for transmitting the target query result to a terminal, so as to display the recommended word set at a display position corresponding to the display sequence in a query result interface by the terminal.

In accordance with one or more embodiments of the present disclosure, Example 12 provides a query result display apparatus, wherein the apparatus comprises:

a second transmitting module for transmitting to a server a received query content;

a fourth determination module for, in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;

a display module for displaying, at the display position in the query result interface, the recommended word set corresponding to the query content.

In accordance with one or more embodiments of the present disclosure, Example 13 provides a computer-readable medium, wherein a computer program is stored therein. When the program is executed by a processing apparatus, implementing steps of the method according to any of Examples 1-10.

In accordance with one or more embodiments of the present disclosure, Example 14 provides an electronic device, comprising:

a memory storing a computer program thereon;

a processor for execution of the computer program in the memory to perform steps of the method according to any of Examples 1-10.

The above description only explains preferred embodiments of the present disclosure and the technical principles applied here. Those skilled in the art should understand that the scope of the present disclosure is not limited to the technical solution consisting of the particular combinations of the above technical features. Meanwhile, the present disclosure also should encompass other technical solutions consisting of any combinations of the above technical feature or other equivalent features without deviating from the above disclosed concept. For example, the above features may substitute with the technical features having similar functions as disclosed here to form a new technical solution.

Furthermore, although the respective operations are depicted in a particular order, it should be appreciated that the operations are not required to be completed in the particular order or in succession. In some cases, multitasking or multiprocessing is also beneficial. Likewise, although the above discussion comprises some particular implementation details, they should not be interpreted as limitations over the scope of the present disclosure. Some features described separately in the context of the embodiments of the description can also be integrated and implemented in a single embodiment. Conversely, all kinds of features described in the context of a single embodiment can also be separately implemented in multiple embodiments or any suitable subcombinations.

Although the subject matter has been described in languages specific to structural features and/or method actions, it should be understood that the subject matter defined in the attached claims is not limited to the above described particular features or actions. On the contrary, the above described specific features and actions are disclosed for implementing examples of the claims. As to the apparatus in the above embodiments, the specific ways for respective modules to perform operations have been elaborated in the method-related embodiments and will not be furnished here.

**Claims**

1. A query result display method, comprising:

   receiving a query content;
   determining query result quality information corresponding to the query content, the query result quality information representing a matching degree between the query content and query results obtained based on the query content;
   determining a display sequence of a recommended word set corresponding to the query content in the query results according to the query result quality information;
   adding the recommended word set to the query results according to the display sequence, to obtain a target query result;
   transmitting the target query result to a terminal, so as to display the recommended word set at a display position corresponding to the display sequence in a query result interface by the terminal.

2. The method of claim 1, wherein the determining a display sequence of a recommended word set corresponding to the query content in the query results according to the query result quality information comprises:

   determining a target number of target query results can be displayed in the query result interface of the terminal;
   determining the display sequence based on a difference value between quality standard information of the query result quality information and the query result quality information, and the target number, wherein a value of the query result quality information is greater than or equal to zero, and the value of the query result quality information is smaller than or equal to the quality standard information.

3. The method of claim 2, wherein the determining a display sequence of a recommended word set corresponding to the query content in the query results according to the query result quality information further comprises:

   acquiring a target range for the display sequence of the recommended word set;
   if the determined display sequence exceeding the target range, correcting the display sequence according to the target range to obtain a corrected sequence, and updating the display sequence to the corrected sequence.

4. The method of claim 1, wherein the query content comprises a plurality of query keywords;
   the determining a display sequence of a recommended word set corresponding to the query content in the query results according to the query result quality information further comprises:

   for each of the query keywords, determining a recommended word display sequence corresponding to the query keyword based on the query result quality information corresponding to the query keyword;
   determining the display sequence corresponding to the query content on the basis of the recommended word display sequences corresponding to each of the query keywords.

5. The method of claim 4, wherein the plurality of query keywords have an OR relationship;
   the determining the display sequence corresponding to the query content on the basis of the recommended word display sequences corresponding to each of the query keywords comprises:

   if the query keywords correspond to different recommended word display sequences, determining each of the recommended word display sequences corresponding to the query keywords as a display sequence corresponding to the query content, and determining recommended words in the recommended word set corresponding to the recommended word display sequence on the basis of the query keywords corresponding to the recommended word display sequence, and adding the recommended words to the target query result;
   if a plurality of the query keywords corresponds to a same recommended word display sequence, determining the recommended word display sequence as a display sequence for the plurality of the keywords, and determining the number of recommended words respectively corresponding to the plurality of query keywords in the recommended word set in accordance with a total number of query keywords corresponding to the recommended word display sequence and a display number of recommended words can be displayed in the recommended word set, so as to acquire recommended words in an amount respectively corresponding to the plurality of query keywords, and add to the target query result.

6. The method of claim 4, wherein the determining the display sequence corresponding to the query content on the basis of the recommended word display sequences corresponding to each of the query keywords comprises:

determining a sequence resulted from averaging and rounding off the recommended word display sequences corresponding to each of the query keywords as the display sequence corresponding to the query content.

7. The method of any of claims 1-6, wherein the query result quality information corresponding to the query content is determined based on the query result quality information corresponding to the query keywords comprised in the query content, and the query result quality information corresponding to the query keywords is predetermined by:

    acquiring a plurality of history query records corresponding to the query keywords;
    preprocessing the plurality of history query records to obtain query result confirmation information corresponding to each of the history query records, wherein the query result confirmation information characterizes operations executed by a user in a process of completing a query based on the query keywords, the operations comprising at least one of: confirmation operation, page-turning operation, keyword modification operation, and browsing operation;
    determining the query result quality information corresponding to the query keywords based on the query result confirmation information corresponding to the plurality of history query records and a decision-making tree model.

8. The method of claim 7, wherein the decision-making tree model is trained and obtained by:

    acquiring a training sample set, wherein each training sample in the training sample set comprises a training query record corresponding to the training sample and marked query result quality information corresponding to the training query record;
    preprocessing the training query record to obtain query result confirmation information corresponding to each of the training query record;
    performing model training with query result confirmation information corresponding to the training query record as input and marked query result quality information corresponding to the training query record as target output, so as to obtain the decision-making tree model.

9. The method of claim 7, wherein each of the query result quality information corresponding to the query keywords is stored by a quality information set, and the method further comprises:

    acquiring a plurality of target query records for updating;

preprocessing the plurality of target query records, and obtaining a target keyword in each of the target query records and query result confirmation information corresponding to the target keyword, wherein the target keyword is a first keyword in the query content corresponding to the target query records;
determining query result quality information corresponding to the target keyword based on the decision-making tree model and query result confirmation information corresponding to the same target keyword;
updating the quality information set with the query result quality information corresponding to the target keyword.

10. A query result display method, comprising:

    transmitting to a server a received query content;
    in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;
    displaying, at the display position in the query result interface, the recommended word set corresponding to the query content.

11. A query result display apparatus, comprising:

    a receiving module for receiving a query content;
    a first determination module for determining query result quality information corresponding to the query content, the query result quality information representing a matching degree between the query content and query results obtained based on the query content;
    a second determination module for determining a display sequence of a recommended word set corresponding to the query content in the query results according to the query result quality information;
    a processing module for adding the recommended word set to the query results according to the display sequence, to obtain a target query result;
    a first transmitting module for transmitting the target query result to a terminal, so as to display the recommended word set at a display position corresponding to the display sequence in a query result interface by the terminal.

12. A query result display apparatus, wherein the apparatus comprises:

a second transmitting module for transmitting to a server a received query content;
a fourth determination module for, in response to receiving a target query result transmitted by the server, determining a display position corresponding to a recommended word set according to a display sequence corresponding to the recommended word set indicated by the target query result, wherein the target query result comprises the recommended word set and the display sequence, and a query result obtained based on the query content, the display sequence is determined by the server on the basis of query result quality information corresponding to the query content, the query result quality information representing a matching degree between the query content and the query result;
a display module for displaying, at the display position in the query result interface, the recommended word set corresponding to the query content.

13. A computer-readable medium, comprising a computer program stored therein, wherein when the program executed by a processing apparatus, causing the performance of the method according to any of claims 1-10.

14. An electronic device, comprising:

a memory storing a computer program thereon; and
a processor for execution of the computer program in the memory to perform steps of the method according to any of claims 1-10.

```
┌─────────────────────────────────────────────────────────────┐
│                                                             │  11
│              Receive a query content                        │ ～
│                                                             │
└─────────────────────────────────────────────────────────────┘
                              │
                              ▼
┌─────────────────────────────────────────────────────────────┐
│  Determine query result quality information corresponding to the │  12
│                     query content                           │ ～
└─────────────────────────────────────────────────────────────┘
                              │
                              ▼
┌─────────────────────────────────────────────────────────────┐
│   Determine a display sequence of a recommended word set    │  13
│ corresponding to the query content in the query results according to │ ～
│           the query result quality information              │
└─────────────────────────────────────────────────────────────┘
                              │
                              ▼
┌─────────────────────────────────────────────────────────────┐
│ Add the recommended word set to the query results according to the │  14
│         display sequence, to obtain a target query result   │ ～
└─────────────────────────────────────────────────────────────┘
                              │
                              ▼
┌─────────────────────────────────────────────────────────────┐
│  Transmit the target query result to a terminal, so as to display the │  15
│ recommended word set at a display position corresponding to the │ ～
│   display sequence in a query result interface by the terminal │
└─────────────────────────────────────────────────────────────┘
```

Fig. 1

Fig. 2A

Fig. 2B

Q Andy Lau

Andy Lau - Introduction

Andy Lau - Music

People are searching          M


Andy Lau's nickname          Andy Lau's MV
Andy Lau's representative works   Andy Lau's movie

Andy Lau - Related actors

Data of records set by Andy Lau

Fig. 3

Q Andy Lau, Leung Chiu Wai and Lai Ming

Andy Lau, Leung Chiu Wai - TV series

Andy Lau, Leung Chiu Wai and Lai Ming - Images

People are searching          N

Andy Lau's nickname          Andy Lau's MV
Leung Chiu Wai's representative works   Leung Chiu Wai's movie

Lai Ming - Music

At prime times of their careers, Andy Lau, Leung Chiu Wai and Lai Ming XXXX

People are searching          Q

Lai Ming's classical songs          Lai Ming born in Beijing
Lai Ming's representative works   Lai Ming's movie

Fig. 4

10

Query Result Display Apparatus

Receiving Module                    101

First Determination Module          102

Second Determination Module         103

Processing Module                   104

First Transmitting Module           105

Fig. 5

**600**

Processing Unit    601    ROM    602    RAM    603

604

I/O Interface    605

Input Unit    Output Unit    Storage Unit    Communication Unit

606            607           608             609

Fig. 6

## INTERNATIONAL SEARCH REPORT

| | International application No. |
|---|---|
| | **PCT/CN2022/104090** |

**A. CLASSIFICATION OF SUBJECT MATTER**

G06F 16/9535(2019.01)i; G06F 16/9538(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; CNKI; WPI; EPODOC: 查询, 搜索, 结果, 显示, 质量, 匹配, 推荐词, 顺序, 位置, query, search, result, display, quality, match, recommend, order, position

**C. DOCUMENTS CONSIDERED TO BE RELEVANT**

| Category* | Citation of document, with indication, where appropriate, of the relevant passages | Relevant to claim No. |
|---|---|---|
| PX | CN 113626715 A (BEIJING BYTEDANCE NETWORK TECHNOLOGY CO., LTD.) 09 November 2021 (2021-11-09)<br>  claims 1-14 | 1-14 |
| A | CN 109299383 A (BEIJING BYTEDANCE NETWORK TECHNOLOGY CO., LTD.) 01 February 2019 (2019-02-01)<br>  description, paragraphs [0023]-[0051] | 1-14 |
| A | CN 112035727 A (ALIBABA GROUP HOLDING LIMITED) 04 December 2020 (2020-12-04)<br>  entire document | 1-14 |
| A | CN 111782958 A (SHENZHEN HUANTAI TECHNOLOGY CO., LTD. et al.) 16 October 2020 (2020-10-16)<br>  entire document | 1-14 |
| A | US 2021209106 A1 (INTERNATIONAL BUSINESS MACHINES CORPORATION) 08 July 2021 (2021-07-08)<br>  entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2022** | **26 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104090**

| Patent document cited in search report | | | Publication date (day/month/year) | Patent family member(s) | Publication date (day/month/year) |
|---|---|---|---|---|---|
| CN | 113626715 | A | 09 November 2021 | None | |
| CN | 109299383 | A | 01 February 2019 | None | |
| CN | 112035727 | A | 04 December 2020 | None | |
| CN | 111782958 | A | 16 October 2020 | None | |
| US | 2021209106 | A1 | 08 July 2021 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110991160